(19) Europäisches Patentamt
European Patent Office
Office européen des brevets

(11) Publication number: 0 190 906 B1

# (12) EUROPEAN PATENT SPECIFICATION

(45) Date of publication of patent specification: 09.08.89

(51) Int. Cl.$^4$: B 65 G 43/08, B 65 G 47/31, A 21 C 15/00

(21) Application number: 86300713.4

(22) Date of filing: 03.02.86

## (54) Apparatus for transferring articles.

(30) Priority: 01.02.85 JP 16598/85

(43) Date of publication of application: 13.08.86 Bulletin 86/33

(45) Publication of the grant of the patent: 09.08.89 Bulletin 89/32

(84) Designated contracting states: AT BE CH DE FR GB IT LI NL SE

(56) References cited:
GB-A- 1 157 255
GB-A- 1 255 513
NL-A- 8 401 562
US-A- 3 581 677
US-A- 4 024 945
US-A- 4 372 438
US-A- 4 442 657

(73) Proprietor: RHEON AUTOMATIC MACHINERY CO. LTD.
2-3, Nozawa-machi
Utsunomiya-shi Tochigi-ken (JP)

(72) Inventor: Takao, Kenji
735 Kawamata-cho Utsunomiya-shi
Tochigi-ken (JP)

(74) Representative: Tomlinson, Kerry John et al
Frank B. Dehn & Co. European Patent Attorneys
Imperial House 15-19 Kingsway
London WC2B 6UZ (GB)

EP 0 190 906 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Jouve, 18, rue St-Denis, 75001 Paris, France

## Description

This invention relates to a transferring apparatus for articles and relates particularly but not exclusively to apparatus whereby articles which are formed by cutting dough of pizza, bread, confectionery, or like food, into pieces of predetermined size, or which are formed by further processing of such dough, can be transferred onto a succession of uniformly spaced trays. The invention thus relates to an apparatus whereby, if desired, articles, which are formed into pieces of predetermined shape and conveyed by means of a conveyor, can be transferred accurately to particular points on trays even when the interval between the articles being conveyed may vary.

An apparatus for conveying bread, confectionery or the like, which is formed into pieces of a predetermined shape by a shaping device or the like, by a conveyor, and for transferring the articles from that conveyor onto another conveyor, is disclosed in, for example, U.S. Patent No. 4 372 438 and U.S. Patent No. 4 024 945.

In the apparatus of the first-mentioned patent, a combination of a table with a plurality of slits, a vertically displaceable rotating shaft, and a plurality of flanges on the rotating shaft is positioned between a feed conveyor and a receiving conveyor, the flanges being movable through the slits so that they can be above or below the slits, and soft articles irregularly conveyed on the feed conveyor being temporarily stopped by lowering the rotating flanges to a point below the slits. Articles are then caused to be transferred to a receiving conveyor by elevating the flanges, thereby adjusting the intervals between articles transferred to the receiving conveyor. The apparatus is not suitable e. g. for transferring articles to a tray.

In the apparatus disclosed in the second patent, articles supplied from a shaping device, which articles keep a uniform and predetermined interval therebetween, are arrayed on a plate of a transferring device to keep a fixed interval therebetween and the articles are then dropped to be transferred onto a tray or the like in a row parallel to the direction of the tray. Thus, although the transferring operation can be carried out accurately, the articles do not always land on the tray stably, and, in addition, to properly set the transfer timing is relatively difficult. Further, this known device is complex in construction, leading to high costs.

Also, especially when the use of a baking plate is required for baking the articles, the articles must be accurately placed in recesses of a predetermined shape and spacing formed on the baking plate. In such a case, it is difficult for the aforementioned transferring device to transfer accurately the articles into the respective recesses of the baking plate.

US 4442657 describes apparatus as mentioned in the opening part of claim 1. In particular it describes a device comprisinq a pair of overlapping parallel conveyor belts and a third belt running at right angles on a level with the lower of the parallel belts. The upper parallel belt is fitted with suction caps which pick up biscuits from the lower parallel belt, carry them to the third belt and there release them into cases. The parallel belts move continuously and each biscuit is aligned with a suction cup under the control of a pulse counter correction unit. Counting-up starts when a biscuit passes a fixed point and at the same time the speed of the upper belt is doubled. Counting-down starts when a suction cup passes the fixed point. The cup and the biscuit therefore meet when the counter reaches zero. The pick-up point is variable within the region of overlap of the two parallel belts, according to the original misalignment.

It is an object of the present invention to provide an apparatus whereby articles conveyed in a non-uniformly arrayed state on a conveyor can be automatically transferred to a predetermined location on e. g. a tray.

An apparatus for transferring articles, comprising a conveyor mechanism including a first conveyor which transports a succession of articles in a longitudinal direction, a second conveyor positioned to receive articles from the first conveyor, detecting means associated with the first conveyor and adapted to detect articles at a predetermined location thereon, and adjusting means adapted to adjust the speed of one of said conveyors, characterized in that said second conveyor is positioned generally below a delivery end of the first conveyor and further characterized by encoding means associated with the second conveyor and adapted to provide a pulsed output signal when the second conveyor conveys the articles a unit distance and control means having memory means for storing the number of the pulsed output signals corresponding to a predetermined distance at which the articles are placed on the second conveyor, said adjusting means adjusting the speed of the first or second conveyor so that the time required for an article detected at said predetermined location to reach the delivery end equals the time required for the preceding article to be conveyed a predetermined distance on the second conveyor based on the number of the pulsed output signals stored in the memory means and the number of the pulsed output signals received from the encoding means.

A detecting unit transmits to the control means information on the detected articles being conveyed on the first conveyor, the second conveyor being driven by a driving device which can vary the conveying speed, and the drive shaft of the driving device being coupled to a rotary encoder which transmits conveying speed information to the control means. Information concerning the desired arrangement of articles e. g. corresponding to recesses on trays carried by the second conveyor is transmitted to the control means.

When the articles being conveyed on the first conveyor are detected by the detecting unit, the speed of the second conveyor is controlled by the control means on the basis of a signal from the detecting unit, pulses from the rotary encoder, and the article arrangement information, so that the articles can be transferred to predetermined locations on the trays. When the spacing between the articles on the first conveyor is not uniform, the speed of the second conveyor can be so controlled to compensate for variations in the spacing.

Further, in another embodiment the second conveyor for conveying trays can be kept at constant speed, and instead the speed of the first conveyor which supplies the articles can be varied appropriately in response to the control means.

An embodiment of the invention will now be described, by way of example only, with reference to the accompanying drawings, wherein :

Fig. 1 is a schematic side elevation illustrating an embodiment of transferring apparatus in accordance with the invention ;

Fig. 2 is a sectional view showing the arrangement of articles on the trays ;

Fig. 3 illustrates how the articles are transferred by the apparatus of the present invention ;

Fig. 4 illustrates the relation between the output of the counter and the speeds (V) of the first and second conveyors ;

Fig. 5 is a block diagram showing the form of the control device.

An embodiment of transferring apparatus in accordance with the present invention will now described with reference to the drawings. As shown in Fig. 1, the apparatus comprises a first conveyor 3 for conveying shaped articles 1, and a second conveyor 5, which conveys trays 2. The trays 2 are uniformly spaced in the longitudinal direction.

The first conveyor 3 is coupled to a shaping device (not shown) positioned upstream thereof, such as a cutting device or a rounding device which forms articles 1 of desired shape. The conveyor 3 receives the shaped articles 1 from such device and conveys them at a constant speed. An article detecting device 4, such as a photo-electric tube, is disposed at a position a predetermined distance upstream of the delivery end of the first conveyor 3.

The second conveyor 5, conveying the trays 2 which receive the articles 1 from the delivery end of the first conveyor 3, is driven by a driving roller 7 mounted on a drive shaft 6, which is in turn driven by a variable speed motor.

A rotary encoder 8 is coupled to the drive shaft 6 and is adapted to transmit information indicative of the speed of rotation of the shaft 6, and thus of the speed of the second conveyor 5, to a control means 10.

The information output from the detecting device 4 is also transmitted to the control means 10.

The desired relation between the trays 2 and the positon of the articles 1 to be placed thereon is pre-set as shown in Fig. 2. The trays 2 are conveyed on the tray conveyor 5 with a uniform longitudinal spacing between adjacent trays 2a and 2b. For the purposes of the following description, it is assumed that the longitudinal spacing between the adjacent articles 1 placed on the trays 2 is x, whilst the longitudinal spacing between the trailing article 1a on one tray 2a and the leading article 1b on the following adjacent tray 2b is y.

The control means 10 of the illustrated embodiment is shown schematically in Fig. 5.

The control means 10 includes a down counter 11 which receives the output signal of the rotary encoder 8 and also the output signals from a position selection device 14. A calculator 12 is connected to the down counter 11, and receives information therefrom. Information from the article detecting device 4 is also transmitted to the calculator 12.

The calculator 12 processes the information received from the down counter 11 and the article detecting device 4, and generates a signal which controls the rotation speed of the drive motor 9. This signal is transmitted to a D/A converter 13, connected to the calculator 12. The D/A converter 13 converts the digital signals into an analog signal and sets the speed of the tray conveyor 5 as directed.

The operation of the transferring apparatus will now be described further with reference to Figs. 2, 3 and 4. As already described, the longitudinal spacing between adjacent articles 1b and 1c on each tray is denoted x, and the longitudinal spacing between the trailing article la on a first tray 2a and the leading article 1b on the next tray 2b is denoted y. It is also assumed that the speed of the first conveyor 3 is $V_1$ (a constant speed), and that of the second conveyor 5 is $V_2$ (a variable speed). Transfer of the articles onto the trays 2 so that the articles have spacing x will now be described.

As shown in Fig. 3, the distance between the article detecting device 4 associated with the article conveyor 3 and the delivery end of such conveyor 3 is set at L. The second conveyor 5 is a chain conveyor on which the uniformly spaced trays 2 of predetermined dimensions are arranged. Longitudinal displacements of the chain conveyor are proportional to the corresponding number of pulses generated by the rotary encoder 8. Therefore, movements of the conveyor can be controlled in accordance with numbers of pulses, i. e. by selecting a number of pulses corresponding to any desired distance through which a certain point on the conveyor moves.

Since each tray 2 moves with the conveyor the position of a desired point on each tray 2 can likewise be defined in accordance with the pulse output from encoder 8.

The system is set-up so that when a location on the second conveyor 5 onto which an article 1 is to be placed reaches position shown by A in Fig. 3, a down-counting of pulses begins, and when such location reaches position C coinciding

with the delivery end of the first conveyor 3, the counting of pulses reaches zero. The number of pulses indicative of the spacing between the points A and C is denoted xp. The number of pulses xp is selected by means of the position selection device 14 of the control means 10 and corresponds to the number of pulses equivalent to movement of the conveyor 5 through the desired spacing x between articles to be placed thereon.

Assuming, for example, that the location on the tray 2 where an article is to be placed reaches a further point B when a corresponding article 1 being conveyed by the article conveyor 3 is detected by the article detecting device 4, then the number of pulses remaining in the down counter 11 can be expressed by :

$$xp - zp$$

where zp is the number of pulses corresponding to the distance between points A and B, and such remaining pulse number provides a factor for controlling the speed of the tray conveyor 5.

Thus, the time $T_1$ required for the article 1 to move from the point where it is detected on the first conveyor 3 to the delivery end is expressed as :

$$T_1 = L/V_1$$

wherein L is as explained earlier and $V_1$ is the velocity of the first conveyor 3. The length of time $T_2$ required for the article receiving location of the tray 2 to move from point B to the delivery end is equal to :

$$T_2 = (x - z)/V_2$$

where z is the distance between points A and B to provide correct location of the article the time $T_1$ must be equal to $T_2$, and therefore from the above two expressions, the required speed $V_2$ of the second conveyor 5 can be calculated by a formula :

$$V_2 = (x - z)\,V_1/L$$

The rotation speed of the motor 9 driving the second conveyor 5 is determined on the basis of the speed $V_2$ given by the above expression. Thus, the rotation speed of the motor may be controlled in accordance with the number of pulses (xp-zp) remaining in the down counter 11.

Similarly, when an article is to be placed on the first location of a trailing tray 2b, point A is selected so as to give the number of pulses yp corresponding to the aforementioned spacing y. The selection of the number of pulses yp is made by the position selection device 14 as in the case of xp. The remaining process is similar to that for x.

In the illustrated apparatus, therefore, the conveying speed $V_2$ of the second conveyor 5 is controlled in a manner as shown in Fig. 4, where detection signals from the detector 4 are shown as a comb like line, and the down counting of pulses is shown as a saw-tooth-form line. A represents the point at which the down-counting begins, and B represents the point at which the article 1 is detected by the detector 4. Calculation of the speed of the conveyor 5 in the time span between point B and point C is carried out by the calculator 12 and therefore the count down speed during this time span is accelerated or retarded in accordance with the calculation. As shown in Fig. 4 this time span is T, and has a constant value ; the speed of the count down, which is proportional to the speed of the second conveyor, during the time span T is indicated by the inclination of the line B-C. The point A is set so as to coincide with point C, so that in successive cycles when one count down reaches zero the next count immediately begins. The dotted horizontal line shows the speed of the first and second conveyors 3 and 5 which are run at the same speed during the time span between point A and point B. The speed of the second conveyor 5 during the time span T in successive cycles is shown as $V_{2\text{-}1}$, $V_{2\text{-}2}$, and $V_{2\text{-}3}$ in solid lines. Upon transfer of each article from the first conveyor to the second, the speed $V_2$ of the second conveyor 5 returns to the speed $V_1$ of the first conveyor 3. When upon detection of an article the number of pulses remaining in the down counter 11 is relatively small, the speed $V_2$ of the second conveyor 5 is decreased as shown at $V_{2\text{-}3}$, and conversely when the number of the remaining pulses is relatively large, the speed $V_2$ is increased as shown at $V_{2\text{-}1}$, $V_{2\text{-}2}$, respectively.

When the interval between an article and the preceding article conveyed on the first conveyor 3 is so large that the following article does not arrive at the delivery end of the first conveyor 3 when the number of pulses remaining in the down counter 11 has decreased to zero, the cycle simply starts again so that one article receiving location on a tray is missed and the next article receiving location of the tray instead receives such following article.

However, when an article 1 on the first conveyor 3 is not detected by the detecting device 4 for a certain length of time, the second conveyor 5 is adapted automatically to stop until such time as an article 1 is again conveyed on the conveyor 3.

It will therefore be seen that in the illustrated apparatus, the articles can be accurately transferred to predetermined locations on the trays, even when the articles are not evenly spaced apart on the first conveyor 3.

In the illustrated system, whilst the trays may be of the type having a planar base plate, it will be appreciated that the apparatus is particularly advantageous for trays having recesses for accommodating individual articles to be baked. The material forming the articles transferred onto the trays may for example be bread dough or confectionery. The apparatus is equally applicable where articles in a single longitudinal line are arranged on the first conveyor, or where a plurality of

transverse rows of articles are conveyed.

In the aforementioned embodiment, the second conveyor 5 conveying the trays 2 is adapted to move at a variable speed, whilst the speed of the first conveyor 3 is constant. It is apparent however, that the second conveyor 5 may instead have a constant speed whilst the speed of the first conveyor 3 is variable. In this case the manner of control by the control device of the apparatus is similar to that described above, so that the articles can be successively transferred from the first conveyor 3, e. g. onto article receiving regions formed on the trays carried by the second conveyor 5 which is kept at a constant speed.

Further, a commonly employed control device, such as a micro-computer can be used instead of the control means 10 comprising the calculator 12, the down counter 11, and the position selection device 14.

The article transfer can be achieved by merely controlling the speed of either the second conveyor 5 or the first conveyor 3 on the basis of signals from the control means. Therefore, the overall construction of the apparatus can be simplified.

## Claims

1. An apparatus for transferring articles, comprising a conveyor mechanism including a first conveyor (3) which transports a succession of articles in a longitudinal direction, a second conveyor (5) positioned to receive articles from the first conveyor, detecting means (4) associated with the first conveyor and adapted to detect articles at a predetermined location thereon, and adjusting means adapted to adjust the speed of one of said conveyors, characterized in that said second conveyor is positioned generally below a delivery end of the first conveyor and further characterized by encoding means (8) associated with the second conveyor (5) and adapted to provide a pulsed output signal when the second conveyor (5) conveys the articles a unit distance and control means (10) having memory means for storing the number of the pulsed output signals corresponding to a predetermined distance at which the articles are placed on the second conveyor, said adjusting means adjusting the speed of the first or second conveyor so that the time required for an article detected at said predetermined location to reach the delivery end equals the time required for the preceding article to be conveyed a predetermined distance on the second conveyor based on the number of the pulsed output signals stored in the memory means and the number of the pulsed output signals received from the encoding means.

2. The apparatus of claim 1 wherein the first conveyor is a constant speed conveyor.

3. The apparatus of claim 1 wherein the second conveyor is a constant speed conveyor.

## Patentansprüche

1. Vorrichtung zur Übergabe von Gegenständen umfassend einen Fördermechanismus mit einem ersten Förderer (3), der eine Reihenfolge von Gegenständen in Längsrichtung transportiert, einem zweiten Förderer (5), der zur Übernahme von Gegenständen vom ersten Förderer positioniert ist, dem ersten Förderer zugeordneten Fühlermitteln (4) zum Wahrnehmen von Gegenständen an einer vorbestimmten Stelle auf diesem, und Einstellmitteln zum Einstellen der Geschwindigkeit eines der Förderer, dadurch gekennzeichnet, daß der zweite Förderer im allgemeinen unter einem Abgabeende des ersten Förderers positioniert ist und weiters gekennzeichnet durch dem zweiten Förderer (5) zugeordnete Codiermittel (8) zur Lieferung eines gepulsten Ausgangssignals, wenn der zweite Förderer (5) die Gegenstände um eine Einheitsentfernung fördert, und Steuermittel (10) mit Speichermitteln zum Speichern der Anzahl der gepulsten Ausgangssignale, die einem vorbestimmten Abstand entsprechen, in welchem die Gegenstände auf dem zweiten Förderer placiert sind, wobei die Einstellmittel die Geschwindigkeit des ersten oder zweiten Förderers einstellen, sodaß die Zeit, die ein an der vorbestimmten Stelle wahrgenommener Artikel braucht, um das Abgabeende zu erreichen, gleich ist der Zeit, die der vorhergehende Gegenstand benötigt, um auf dem zweiten Förderer um einen vorbestimmten Abstand gefördert zu werden, auf Grund der Anzahl der im Speichermittel gespeicherten gepulsten Ausgangssignale und der Anzahl der vom Codiermittel empfangenen gepulsten Ausgangssignale.

2. Vorrichtung nach Anspruch 1, worin der erste Förderer ein Konstantgeschwindigkeitsförderer ist.

3. Vorrichtung nach Anspruch 1, worin der zweite Förderer ein Konstantgeschwindigkeitsförderer ist.

## Revendications

1. Appareil de transfert d'articles, comprenant un mécanisme transporteur qui comporte un premier transporteur (3) transportant une succession d'articles dans une direction longitudinale, un second transporteur (5) disposé de façon à recevoir des articles du premier transporteur, des moyens (4) de détection associés au premier transporteur et conçus pour détecter des articles en un emplacement prédéterminé sur ce premier transporteur, et des moyens de réglage conçus pour régler la vitesse de l'un desdits transporteurs, caractérisé en ce que ledit second transporteur est disposé globalement au-dessous d'une extrémité de distribution du premier transporteur et en outre caractérisé par des moyens de codage (8) associés au second transporteur (5) et conçus pour produire un signal pulsé de sortie lorsque le second transporteur (5) transporte les articles sur une distance unitaire et des moyens de

commande (10) comportant des moyens à mémoire destinés à enregistrer le nombre de signaux pulsés de sortie correspondant à une distance prédéterminée à laquelle les articles sont placés sur le second transporteur, lesdits moyens de réglage réglant la vitesse du premier ou du second transporteur afin que le temps demandé à un article détecté audit emplacement prédéterminé pour atteindre l'extrémité de distribution soit égal au temps demandé à l'article précédent pour être transporté sur une distance prédéterminée sur le second transporteur, sur la base du nombre de signaux pulsés de sortie enregistrés dans les moyens à mémoire et du nombre de signaux pulsés de sortie reçus des moyens de codage.

2. Appareil selon la revendication 1, dans lequel le premier transporteur est un transporteur à vitesse constante.

3. Appareil selon la revendication 1, dans lequel le second transporteur est un transporteur à vitesse constante.

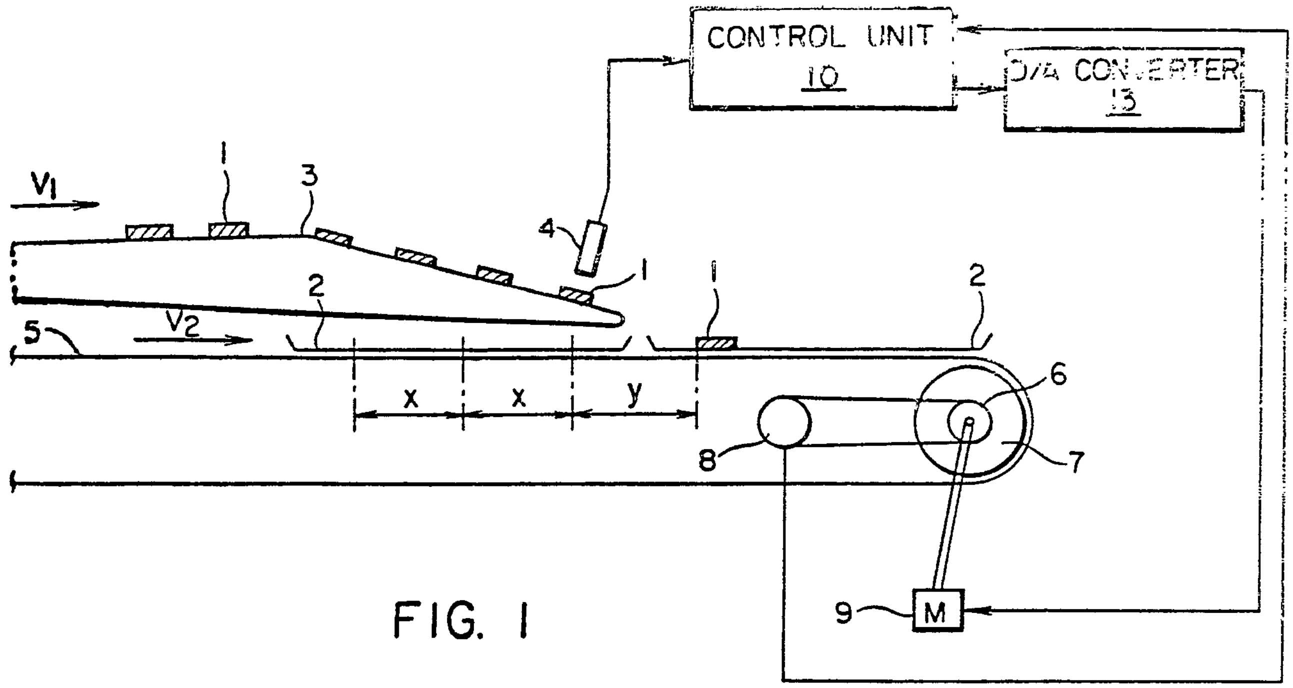


FIG. 1

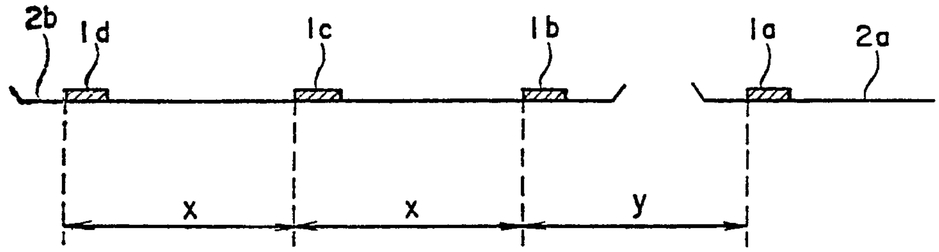


FIG. 2

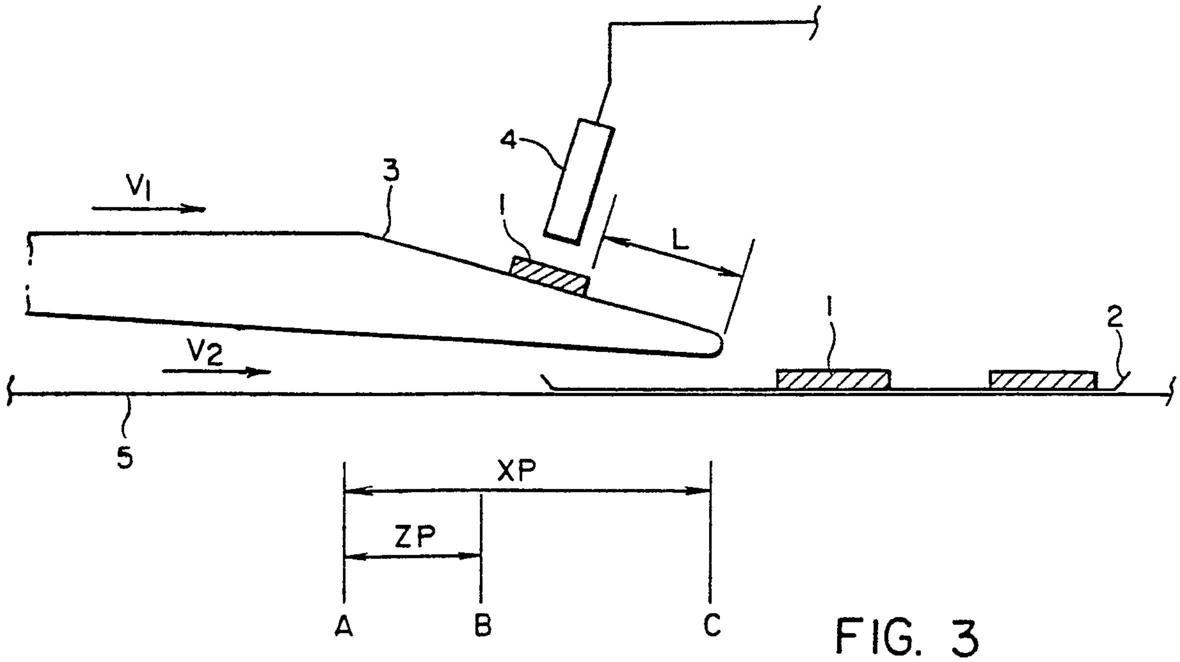


FIG. 3

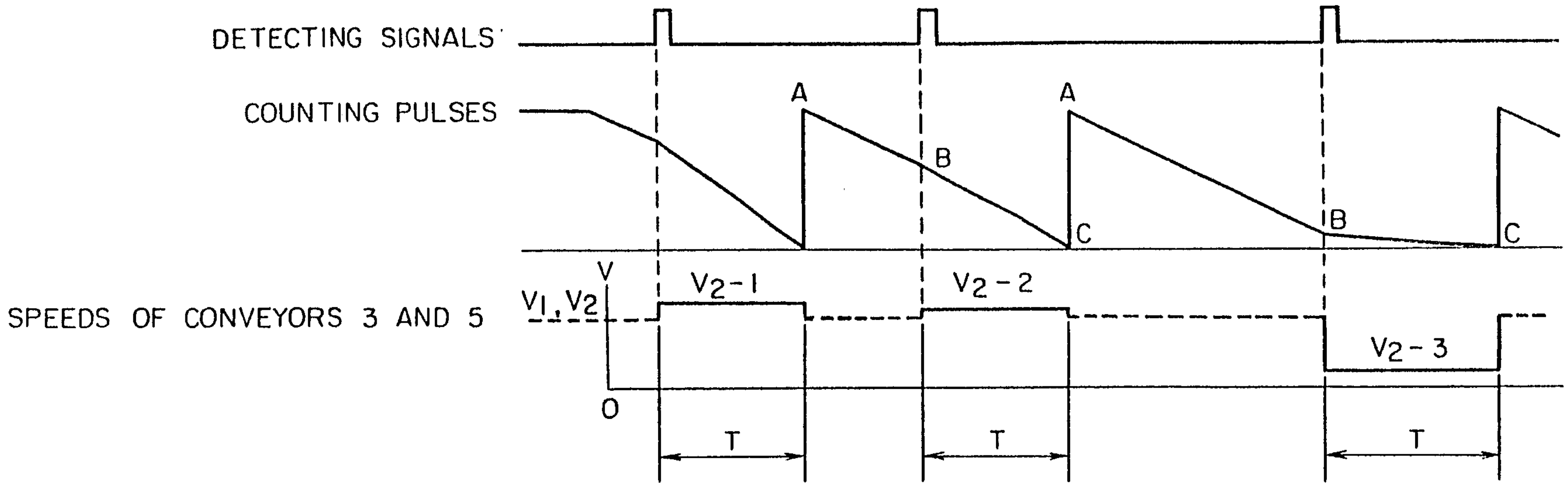
DETECTING SIGNALS
COUNTING PULSES
SPEEDS OF CONVEYORS 3 AND 5
A
B
C
V
$V_1, V_2$
$V_2-1$
$V_2-2$
$V_2-3$
O
T

FIG. 4

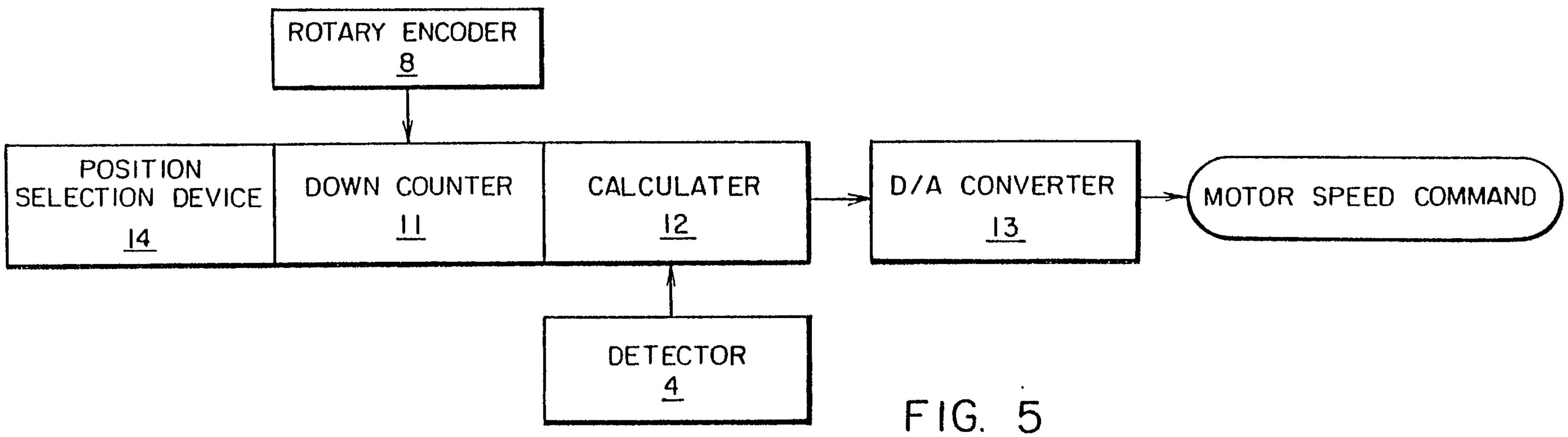
ROTARY ENCODER 8
POSITION SELECTION DEVICE 14
DOWN COUNTER 11
CALCULATER 12
D/A CONVERTER 13
MOTOR SPEED COMMAND
DETECTOR 4

FIG. 5